## Europäisches Patentamt
## European Patent Office
## Office européen des brevets

(11) Publication number: **0 081 994**
**B1**

(12) **EUROPEAN PATENT SPECIFICATION**

(45) Date of publication of patent specification: **09.03.88**

(51) Int. Cl.⁴: **D 21 H 1/28, C 08 G 71/02, C 08 G 69/48, C 08 G 73/00**

(21) Application number: **82306604.8**

(22) Date of filing: **10.12.82**

(54) **Preparation of thermosetting resins and of pigmented compositions thereof for coating on paper.**

(30) Priority: **11.12.81 JP 200684/81**
**19.01.82 JP 7255/82**
**16.04.82 JP 64191/82**
**16.04.82 JP 64192/82**

(43) Date of publication of application:
**22.06.83 Bulletin 83/25**

(45) Publication of the grant of the patent:
**09.03.88 Bulletin 88/10**

(84) Designated Contracting States:
**CH DE FR GB LI SE**

(56) References cited:
**US-A-2 595 935**
**US-A-3 658 641**
**US-A-4 264 153**
**US-A-4 287 110**

(73) Proprietor: **SUMITOMO CHEMICAL COMPANY, LIMITED**
**15 Kitahama 5-chome Higashi-ku**
**Osaka-shi Osaka 541 (JP)**

(72) Inventor: **Kawakami, Shigenao**
**187, Oaza Mimatsugaoka Nishi 1-chome**
**Sango-sho Ikoma-gun Nara (JP)**
Inventor: **Saka, Terumasa**
**648-6, Hikiso Nishimachi**
**Sakai-shi Osaka (JP)**
Inventor: **Takagishi, Hisao**
**10-7, Koaza Nagashiba Oazo Shimokoma**
**Seika-cho Souraku-gun Kyoto (JP)**
Inventor: **Ura, Shigeru**
**24-13, Sakuragaoka 1-chome**
**Kammaki-cho Kitakatsuragi-gun Nara (JP)**
Inventor: **Iwata, Mikio**
**2-1, Kuwata-cho**
**Ibaraki-shi Osaka (JP)**
Inventor: **Tokugawa, Yoshiharu**
**6-15, Nangu-cho**
**Ashiya-shi Hyogo (JP)**
Inventor: **Jinno, Naoyoshi**
**5-17, Utsubohonmachi 2-chome**
**Nishi-ku Osaka-shi Osaka (JP)**

(74) Representative: **Diamond, Bryan Clive et al**
**Gee & Co. Chancery House Chancery Lane**
**London WC2A 1QU (GB)**

Courier Press, Leamington Spa, England.

**Description**

The present invention relates to the preparation of a paper coating composition which provides coated paper having excellent water resistance, ink receptivity and excellent blister resistance, the coated paper being free from coloring and releasing only an extremely slight quantity of formaldehyde; and to a process for producing a novel thermosetting resin aqueous solution to be used as one component of the paper coating composition.

It has hitherto been known to produce coated paper having excellent printability by coating on paper a paper coating composition containing a pigment and an aqueous binder as major components, and further containing auxiliary agents such as water resistance-imparting agents.

Recent years have seen remarkable progress in techniques for producing coated paper. For example, concentrating the solids of a coating composition has been proposed to allow high-speed coating using a blade coater for the purpose of increasing productivity. Thus, it has been required to increase the solids concentration without an increase in viscosity in order to obtain good coating properties.

In addition, with up-grading and speed-up of printing and with rotary offset printing, a coated layer is required to possess higher water resistance, higher ink receptivity and higher blister resistance.

In order to improve these properties many proposals have been made, such as improvement of the aqueous binder component and improvement of auxiliary agents. For example, in order to improve water resistance, a water resistance-imparting agent is ordinarily introduced as an auxiliary agent because, although water resistance may be improved to some extent by increasing the weight ratio of aqueous binder to pigment, it in turn reduces ink receptivity when printing on the coated paper.

Typical examples of the water resistance-imparting agents are the same as those of aqueous binders. However, although conventionally used or proposed water resistance-imparting agents have some merits, they also possess serious defects, and are thus unsatisfactory in practice. For example, some problems with a melamine-formaldehyde precondensate are that it gives insufficient ink receptivity; that when the pH of the coating composition containing the precondensate is high, it imparts insufficient water resistance; and that free formaldehyde is released from coated paper in a significant amount. No reaction product between polyamidopolyurea and formaldehyde has yet provided sufficient water-resisting and ink receptivity-improving effects, although such products do show some ink receptivity-improving effect, impart some water resistance, and release only small amounts of free formaldehyde from coated paper.

Dialdehydes such as glyoxal are not preferred, because they color coated paper and have poor ink receptivity-improving effect. Multivalent metal salts such as zirconium salts are not preferred either, because they seriously thicken the coating composition.

US—A—4246153 describes a process of preparing a thermosetting resin (of the type referred to herein as (Y)) prepared by reacting urea with a polyalkylene-polyamine, dehydration-condensation reaction of the product with a dibasic carboxylic acid, and reacting the resultant polyamidopolyurea with urea and then with formaldehyde. The resin is used in aqueous solution as part of a composition for making a coated paper having improved water resistance and ink receptivity.

US—A—2595935 describes a process of preparing a heat-cured condensation product of a polyalkylene-polyamine with at least two mols of an epihalohydrin, the product being used to impregnate paper to improve its wet strength.

There has been no suggestion of further reacting or mixing the resin (Y) with a polyalkylene polyamine and an epihalohydrin to provide improved effects of water resistance and ink receptivity in a paper coating composition.

We have now found that a resin of type (Y) which is mixed or reacted with an alkylene amine and epihalohydrin gives excellent improvement in these effects.

According to the present invention we provide a process of preparing a thermosetting resin or composition in aqueous solution from (Y) a water-soluble resin obtained by reacting urea, polyalkylenepolyamine and dibasic carboxylic acid and further reacting the resulting polyamidopolyurea with formaldehyde, characterized by reacting in any order or mixing said water-soluble resin (Y) with (a) at least one alkylenediamine or polyalkylenepolyamine and (b) epihalohydrin.

A novel composition for coating onto paper contains a pigment and an aqueous solution of a water-soluble binder as major components, and further contains a thermosetting resin or composition prepared by the aforesaid process, in aqueous solution.

Alkylenediamines that can be used in the present invention include ethylenediamine, trimethylenediamine, 1,2-propylenediamine, tetramethylenediamine and hexamethylenediamine. These alkylenediamines may be used alone or in combinations of two or more.

The polyalkylenepolyamines to be used in the present invention are preferably polyalkylenepolyamines having two primary amino groups and at least one secondary amino group per molecule and include, for example, diethylenetriamine, triethylenetetramine, tetraethylenepentamine, iminobispropylamine, 3-azahexane-1,6-diamine and 4,7-diazadecane-1,10-diamine. These polyalkylenepolyamines may be used alone or in combination of two or more.

Examples of dibasic carboxylic acids that can be used in the present invention include aliphatic carboxylic acids such as succinic acid, glutaric acid, adipic acid, sebacic acid, maleic acid and fumaric acid; aromatic carboxylic acid such as isophthalic acid and terephthalic acid; and mixtures thereof.

Examples of epihalohydrins that can be used in the present invention include epichlorohydrin and epibromohydrin, with epichlorohydrin being particularly preferred.

The polyamidopolyureas to be used in the present invention include polyamidopolyureas obtained by a deammoniation reaction between urea and polyalkylenepolyamine, a dehydration condensation between the resulting product and dibasic carboxylic acid, and a deammoniation reaction between the resulting product and urea (hereinafter referred to as polyamidopolyurea (I)); and polyamidopolyureas obtained by a dehydration condensation between polyalkylenepolyamine and dibasic carboxylic acid, then a deammoniation reaction between the resulting product and urea (hereinafter referred to as polyamidopolyurea (II)).

In obtaining the polyamidopolyurea (I), the molar ratio of urea to polyalkylenepolyamine is from 1:1.5 to 2.5, and preferably about 1:2. The reaction temperature is suitably from 100 to 200°C, and preferably from 120 to 170°C. This reaction is conducted for from 2 to 8 hours while removing ammonia produced from the reaction system. Then, the reaction product is subjected to a dehydration condensation with 0.3 to 0.7 mol, per mol of polyalkylenepolyamine used, of a dibasic carboxylic acid. This reaction is conducted at a reaction temperature of from 120 to 250°C, and preferably of from 140 to 200°C, for from 2 to 10 hours while removing water produced from the reaction system. The thus obtained condensation reaction product is further reacted with urea. The amount of urea reacted is from 0.2 to 1.5 moles, and preferably from 0.5 to 1.1 moles, per mole of secondary amino group in the starting polyalkylenepolyamine. The reaction temperature is from 100 to 180°C, and preferably from 120 to 150°C, and the reaction is carried out for from 1 to 5 hours while removing ammonia produced from the reaction system. Thus, a polyamidopolyurea (I) is obtained.

In obtaining the polyamidopolyurea (II), the reaction between polyalkylenepolyamine and dibasic carboxylic acid is carried out at a temperature of from 120 to 250°C, and preferably of from 140 to 200°C, for from 2 to 10 hours while removing water produced from the reaction system. From 1.4 to 3.0 moles, and preferably from 1.8 to 2.5 moles, of the polyalkylenepolyamine is used per mole of the dibasic carboxylic acid. The thus obtained dehydration condensation reaction product is then reacted with urea. The urea is used in an amount of from 0.2 to 1.0 mole, and preferably from 0.4 to 0.8 mole, per mole of amino group in the starting polyalkylenepolyamine. The reaction temperature is from 100 to 180°C, and preferably from 120 to 150°C. The reaction is carried out for from 1 to 5 hours while removing ammonia produced from the reaction system. The desired amount of urea may be charged at one time to react, or a part of the desired amount of urea may first be charged, and, after completion of the deammoniation reaction, the remaining amount of urea may be charged, followed by again conducting deammoniation reaction. Thus, polyamidopolyurea (II) is obtained.

The thus obtained polyamidopolyurea is dissolved in water to react it with formaldehyde. This reaction is conducted in an aqueous solution containing from 20 to 70 weight%, and preferably 30 to 60 weight%, of the polyamidopolyurea and having a pH adjusted to 7 or less, preferably 3.5 to 6.5, with an acid such as hydrochloric acid, sulfuric acid, phosphoric acid, formic acid or acetic acid, at a reaction temperature of 40 to 80°C for 1 to 10 hours. This reaction is preferably conducted under acidic conditions as described above. However, the end product of the present invention can also be obtained by initially conducting the reaction under alkaline conditions of, for example, pH 8 to 12, adjusting the pH to 7 or less, and preferably 3.5 to 6.5, and continuing the reaction. In this case, the reaction under alkaline conditions is conducted at from 40 to 80°C for from 0.5 to 3 hours, and the subsequent reaction under acidic conditions is carried out at from 40 to 80°C for from 1 to 10 hours. The amount of formaldehyde is suitably from 0.2 to 1 mole, and preferably from 0.3 to 0.7 mole, per mole of the total urea used for synthesizing the polyamidopolyurea.

After completion of the reaction, the pH of the resulting reaction product may, if desired, be adjusted to from 6 to 9. The water-soluble resin thus obtained is hereinafter referred to as (Y).

The water-soluble resin (Y) obtained as described above by reacting polyamidopolyurea with formaldehyde is further reacted or mixed with (a) at least one (e.g., one, two or more) polyalkylenepolyamine or alkylenediamine and (b) epihalohydrin.

In this reaction, the components (Y), (a) and (b) may be reacted with each other at the same time, or (Y) and (b) may be first reacted with each other, followed by reacting the resulting reaction product with (a), or a reaction product (X) obtained by the reaction between (a) and (b) may be reacted with (Y). In using these ingredients as a mixture, (Y) may be mixed with (a) and (b), or a reaction product between (Y) and (b) may be mixed with (a), or (Y) may be mixed with a reaction product (X) between (a) and (b). As to the manner of addition to a paper coating composition, a previously prepared mixture may be added to a paper coating composition, or individual ingredients may separately be added to a paper coating composition.

The reaction temperature in simultaneously reacting (Y), (a) and (b) with each other is from 30 to 80°C, that of the reaction between (Y) and (b) is from 30°C to the reflux temperature thereof, and that of the reaction between (a) and the reaction product between (Y) and (b) is from 30°C to 100°C. These reactions are conducted for from 0.5 to 10 hours.

The amount of polyalkylenepolyamine or alkylenediamine, component (a), to be used in the reaction or mixing is suitably from 0.1 to 3 moles, and preferably from 0.2 to 1.5 moles, per mole of the dibasic carboxylic acid used for synthesizing polyamidopolyurea. The amount of epihalohydrin, (b), is suitably from 0.1 to 4 moles, and preferably 0.5 to 3 moles, per mole of the polyalkylenepolyamine or alkylenediamine, (a), used.

3

After completion of the reaction or mixing, the pH of the resulting reaction product or mixture may, if desired, be adjusted to from 2.5 to 8.

On the other hand, in the case of reacting the reaction product (X) between (a) and (b) with (Y), the reaction between (a) and (b) is conducted at from 30 to 80°C for from 30 minutes to 10 hours. The molar ratio of amine (a) to epihalohydrin (b) is suitably 1:0.1 to 20, and preferably 1:2 to 10.

In mixing component (X) with (Y), (X) and (Y) may separately be mixed with a paper coating composition, or a previously prepared mixture of (X) and (Y) may be added to a paper coating composition. The amount of (X) to be used is from 0.05 to 5 moles, and preferably from 0.1 to 2 moles, of (a) in (X) per mole of the dibasic carboxylic acid used for synthesizing (Y).

In reacting (X) with (Y), this reaction is carried out at from 20 to 80°C for from 30 minutes to 10 hours. After completion of the reaction, the pH of the product may, if desired, be adjusted to 2 to 6.

The paper coating composition of the present invention is prepared in a conventional manner, but, for fully attaining the desired effect, an aqueous binder is compounded in a solid amount of from 3 to 30 weight%, and preferably from 5 to 20 weight%, based on the weight of pigment, and a reaction product or mixture of (a), (b), and (Y) is compounded in a solid amount of from 0.05 to 5 weight%, and preferably from 0.1 to 2 weight%, based on the weight of pigment.

In some cases, it may be useful to add another water resistance-imparting agent.

As the aqueous binder and the pigment to be used in preparing the paper coating composition of the present invention, any conventionally known may be used. Examples of the aqueous binder are water-soluble binders such as starch, oxidized starch, modified starch, polyvinyl alcohool, casein, gelatin, carboxymethyl cellulose, hydroxyethyl cellulose and soybean protein; and aqueous emulsion or dispersion system binders such as a styrene-butadiene type resin, vinyl acetate resin, ethylene-vinyl acetate resin or methyl methacrylate resin.

Examples of pigment are inorganic pigments such as kaolin clay, titanium dioxide, aluminum hydroxide, calcium carbonate, satin white or barium sulfate; and organic pigments containing styrene or urea as major components. These may be used alone or in combinations of two or more in any desired mixing ratio.

The paper coating composition of the present invention may contain, if desired, other ingredients such as a dispersing agent, a thickening agent, a thinning agent, a defoaming agent, a foam inhibitor, an antiseptic, an antifungal agent, a fluidity-adjusting agent, a repellent, a colorant (e.g., a dye or colored pigment) or an agent for imparting special properties (e.g., an electroconductive agent).

The coating composition of the present invention can be prepared in a manner analogous to conventional coating compositions. Usually, the solids concentration of the coating composition is adjusted to from 30 to 80 weight%, and preferably from 50 to 65 weight%.

The paper coating composition of the present invention is coated on a paper substrate in a conventionally known manner using a blade coater, air-knife coater, roll coater, size-press coater, cast coater or the like, subjected to necessary drying in an ordinary manner, and, if desired, subjected to super calendering, machine calendering or the like to produce coated paper.

The paper coating composition of the present invention obtained as described above has numerous merits; it suffers no color shocks (a serious increase in viscosity of the composition or aggregation of pigment), has excellent stability, and, when coated on a paper substrate, it forms thereon an excellent water-resisting coating layer, releases only a much decreased amount of formaldehyde, shows improved ink receptivity, undergoes no coloration, and imparts improved blister resistance in rotary offset printing.

The present invention will now be illustrated by the following examples and comparative examples, in which percentages are by weight unless otherwise specified. Examples 1 and 2 describe the synthesis of components used in the subsequent examples of compositions according to the invention.

Example 1
(1) Synthesis of resin (A):
292 g (2 moles) of triethylenetetramine and 60 g (1 mole) of urea were charged into a four-neck flask equipped with a thermometer, a reflux condenser, and a stirring rod, and reaction was carried out at 145° to 150°C for 4 hours while removing ammonia produced from the reaction system. Then, 146 g (1 mole) of adipic acid was added thereto, and condensation reaction was conducted at 150 to 155°C for 5 hours. After cooling the reaction mixture to 120°C, 240 g (4 moles) of urea was added thereto, and a deammoniation reaction was conducted at 125° to 130°C for 2 hours, followed by gradual addition of 1,350 g of water to obtain an aqueous solution of polyamidopolyurea.

Thereafter, 202.5 g (2.5 moles) of 37% formalin was added thereto, the pH of the resulting mixture was adjusted to 5 with concentrated hydrochloric acid, and the mixture was kept at 65°C for 4 hours while stirring, to obtain a water-soluble resin (A) containing 30 weight% solids.

(2) Synthesis of resin (B):
Resin (A) was prepared in the same manner as in step (1), and 92.5 g (1 mole) of epichlorohydrin and 217 g of water were added thereto. The resulting mixture was kept at 60°C for 2 hours while stirring, then cooled to 25°C to obtain a thermosetting resin (B) containing 30 weight% solids.

4

(3) Synthesis of resin (C):

Resin (A) was prepared in the same manner as in step (1), and 210 g of water, 146 g (1 mole) of triethylenetetramine, and 92.5 g (1 mole) of epichlorohydrin were added thereto. The resulting mixture was kept at 60°C for 2 hours while stirring, then cooled to 25°C to obtain a thermosetting resin (C) containing 35% solids.

(4) Synthesis of resin (D):

Resin (B) was prepared in the same manner as in step (2), and 73 g (0.5 mole) of triethylenetetramine and 170 g of water were added thereto. The resulting mixture was kept at 60°C for 3 hours while stirring, then cooled to 25°C to obtain a thermosetting resin (D) containing 30 weight% solids.

(5) Synthesis of resin (E):

206 g (2 moles) of diethylenetriamine and 60 g (1 mole) of urea were charged into the same apparatus as in (1), and deammoniation reaction was carried out at 140 to 145°C for 5 hours. Then, 146 g (1 mole) of adipic acid was added thereto, and dehydration condensation was conducted at 160 to 170°C for 2 hours. After cooling the reaction mixture to 120°C, 120 g (2 moles) of urea was added thereto, and deammoniation reaction was carried out at 130 to 140°C for 1.5 hours, followed by gradual addition of 900 g of water to obtain an aqueous solution of polyamidopolyurea.

Then, 145.8 g (1.8 moles) of 37% formalin was added to the aqueous solution, and the resulting mixture was adjusted to pH 4.5 with an N sulfuric acid and kept at 60°C for 3 hours while stirring. Subsequently, 185 g (2 moles) of epichlorohydrin and 277 g of water were added thereto, and the resulting mixture was kept at 60°C for 3 hours while stirring, then cooled to 25°C to obtain a thermosetting resin (E) containing 40% solids.

(6) Synthesis of resin (F):

Resin (E) was prepared in the same manner as in (5), and 146 g (1 mole) of diethylenetriamine and 219 g of water were added thereto to obtain a thermosetting resin (F) containing 40% solids.

(7) Synthesis of resin (G):

365 g (2.5 moles) of triethylenetetramine, 20 g of water, and 146 g (1 mole) of adipic acid were charged into the same apparatus as in (1), and a dehydration condensation was conducted at 155 to 160°C for 4 hours. Then, 60 g (1 mole) of urea was added thereto, and a deammoniation reaction was conducted at 145 to 150°C for 3 hours. The reaction mixture was cooled to 130°C, and 240 g (4 moles) of urea was added thereto. Then, a deammoniation reaction was conducted at 130 to 140°C for 3 hours, followed by gradual addition of 595 g of water to obtain an aqueous solution of polyamidopolyurea.

Then, 162 g (2 moles) of 37% formalin was added thereto, and the resulting mixture was adjusted to pH 4.5 with 20N sulfuric acid and kept at 60°C for 4 hours while stirring.

Subsequently, 180 g of water, 51.5 g (0.5 mole) of diethylenetriamine, and 92.5 g (1 mole) of epichlorohydrin were added thereto, and the resulting mixture was kept at 65°C for 2.5 hours while stirring. The reaction solution was cooled to 25°C to obtain a thermosetting resin (G) containing 50% solids.

(8) Synthesis of resin (H):

206 g (2 moles) of diethylenetriamine and 60 g (1 mole) of urea were charged in the same reaction apparatus as in (1), and a diammoniation reaction was conducted at 145 to 150°C for 3 hours. Then, 118 g (1 mole) of succinic acid was added thereto, and a dehydration condensation was conducted at 150°C for 4 hours. After cooling the reaction solution to 130°C, 96 g (1.6 moles) of urea was added thereto, and a deammoniation reaction was conducted at 125 to 130°C for 3 hours, followed by gradual addition of 540 g of water to obtain an aqueous solution of polyamidopolyurea.

Then, 105.3 g (1.3 moles) of 37% formalin was added thereto, and the solution was adjusted to pH 10 with 10 N sodium hydroxide, kept at 60°C for 2 hours while stirring, adjusted to pH 5.5 with concentrated hydrochloric acid, and kept at 60°C for 3 hours while stirring. Thereafter, 250 g of water, 103 g (1 mole) of diethylenetriamine, and 46.3 g (0.5 mole) of epichlorohydrin were added thereto. The resulting mixture was kept at 65°C for 2 hours while stirring, then cooled to 25°C to obtain a thermosetting resin (H) containing 40% solids.

(9) Synthesis of resin (I):

185.4 g (1.8 moles) of diethylenetriamine, 10 g of water, and 118 g (1 mole) of succinic acid were charged in the same apparatus as in (1), and dehydration condensation was carried out at 150 to 155°C for 8 hours. After cooling the reaction solution to 120°C, 180 g (3 moles) of urea was added thereto, and, after raising the temperature of the solution to 130°C, a deammoniation reaction was conducted at 130 to 135°C for 4 hours. Then, 860 g of water was gradually added thereto to obtain an aqueous solution of polyamidopolyurea. 145.8 g (1.8 moles) of 37% formalin solution was added thereto, and the resulting solution was adjusted to pH 10 with 10N sodium hydroxide aqueous solution, kept at 60°C for 2 hours, adjusted to pH 5.5 with concentrated hydrochloric acid, and kept at 60°C for 3 hours while stirring. Subsequently, 160 g of water, 219 g (1.5 moles) of triethylenetetramine, and 92.5 g (1.0 mole) of epichlorohydrin were added thereto, and the resulting solution was kept at 65°C for 3 hours while stirring. The reaction solution was cooled to 25°C to obtain a thermosetting resin (I) containing 40% solids.

(10) Synthesis of resin (J):

103 g (1 mole) of diethylenetriamine, 146 g (1 mole) of triethylenetetramine, 20 g of water, and 100 g (0.77 mole as dibasic carboxylic acid) of a dibasic carboxylic acid mixture composed of 22% of succinic acid, 64% of glutaric acid and 14% of adipic acid were charged into the same reaction apparatus as in (1), and dehydration condensation was conducted at 160 to 165°C for 4 hours. Then, 60 g (1 mole) of urea was added thereto to conduct a deammoniation reaction at 145 to 150°C for 4 hours. The reaction solution was cooled to 130°C, and 180 g (3 moles) of urea was added thereto to conduct a deammoniation reaction at 130 to 140°C for 5 hours. Thereafter, 410 g of water was gradually added thereto to obtain a polyamidopolyurea aqueous solution. 97 g (1.2 moles) of a 37% formalin was added thereto, and the resulting solution was adjusted to pH 4 with concentrated hydrochloric acid, and kept at 50°C for 6 hours while stirring. Then, 280 g of water, 146 g (1 mole) of triethylenetetramine, and 92.5 g (1 mole) of epichlorohydrin were added thereto. The resulting mixture was kept at 60°C for 2 hours while stirring, then cooled to 25°C to obtain a thermosetting resin (J) containing 50% solids.

(11) Synthesis of resin (K):

206 g (2 moles) of diethylenetriamine, 10 g of water, and 146 g (1 mole) of adipic acid were charged into the same reaction apparatus as in (1), and the temperature of the mixture was raised to 150°C, then kept at 150 to 155°C for 6 hours while evaporating water produced. Then, after cooling the reaction solution to 130°C, 240 g (4 moles) of urea was added thereto, and a deammoniation reaction was conducted at 125 to 130°C for 3 hours while removing ammonia produced from the reaction system. Thereafter, 420 g of water was gradually added thereto to obtain an aqueous solution of polyamidopolyurea.

Then, 162 g (2 moles) of a 37% formalin was added thereto and, after adjusting to pH 5 with concentrated hydrochloric acid, kept at 65°C for 3 hours while stirring. Subsequently, 225 g of water, 73 g (0.5 mole) of triethylenetetramine, 51.5 g (0.5 mole) of diethylenetriamine, and 92.5 g (1.0 mole) of epichlorohydrin were added thereto, and the resulting mixture was kept at 65°C for 2 hours while stirring. This reaction solution was cooled to 25°C to obtain a thermosetting resin (K) containing 50% solids.

(12) Synthesis of resin (L):

292 g (2 moles) of triethylenetetramine and 60 g (1 mole) of urea were added to the same reaction apparatus as in step (1), and the reaction was conducted at 145 to 150°C for 4 hours while removing ammonia from the system. Then, 146 g (1 mole) of adipic acid was added thereto to conduct condensation reaction at 150 to 155°C for 5 hours. After cooling the mixture to 120°C, 240 g (4 moles) of urea was added thereto to conduct a deammoniation reaction for 2 hours at 125 to 130°C. Then, 1,350 g of water was gradually added thereto to obtain an aqueous solution of polyamidopolyurea. 202.5 g (2.5 moles) of 37% formalin was added thereto, and, after adjusting to pH 5 with concentrated hydrochloric acid, the resulting solution was kept at 65°C for 4 hours while stirring. Then, 130 g of water, 120 g (2 moles) of ethylenediamine, and 278 g (3 moles) of epichlorohydrin were added thereto, and the resulting mixture was kept at 60°C for 3 hours while stirring, then cooled to 25°C to obtain a thermosetting resin (L) containing 40% solids.

Example 2

(i) Synthesis of compound (X-1):

44 g (0.3 mole) of triethylenetetramine and 189 g of water were charged into a four-neck flask equipped with a thermometer, a reflux condenser, and a stirring rod, and 167 g (1.8 moles) of epichlorohydrin was added thereto while keeping the temperature at 40°C. The reaction was continued at 40°C for 2 hours, followed by cooling to obtain a 50% aqueous solution of a compound (X-1).

(ii) Synthesis of compound (X-2):

60 g (1 mole) of ethylenediamine and 270 g of water were charged into the same apparatus as used in step (i), and 185 g (2 moles) of epichlorohydrin was added thereto while keeping the inside temperature at 50°C. The reaction was continued for 1 hour at 50°C, then the reaction mixture was cooled to obtain a 50% aqueous solution of a compound (X-2).

(iii) Synthesis of resin (Y-1):

292 g (2 moles) of triethylenetetramine and 60 g (1 mole) of urea were charged in a four-neck flask equipped with a thermometer, a reflux condenser, and a stirring rod, and a deammoniation reaction was conducted at 150 to 153°C for 3 hours. Then, 146 g (1 mole) of adipic acid was added thereto, and a dehydration condensation was conducted at 155 to 160°C for 5 hours. After cooling the reaction mixture to 130°C, 240 g (4 moles) of urea was added thereto, and a deammoniation reaction was conducted at 130 to 135°C for 2 hours, followed by gradual addition of 550 g of water to obtain a polyamidopolyurea aqueous solution.

Then, 121.5 g (1.5 moles) of 37% formalin was added thereto, and the resulting mixture was adjusted

6

to pH 4 with 20 N sulfuric acid, kept at 70°C for 4 hours while stirring, cooled at 30°C, and adjusted to pH 6.5 with a 10N sodium hydroxide aqueous solution to obtain a resin (Y-1) containing 50% solids.

(iv) Preparation of resin (1):

The whole amount of compound (X-1) obtained in (i) and the whole amount of resin (Y-1) obtained in (iii) were charged into the same apparatus as in (iii), and the pH of the resulting mixture was adjusted to 4 with 20 N sulfuric acid while stirring to obtain an aqueous solution of a thermosetting resin (1) containing 50% solids.

(v) Synthesis of resin (2):

As in (iv), the whole amount of compound (X-1) obtained in (i) and the whole amount of (Y-1) obtained in (iii) were charged and reacted with each other at 35 to 40°C for 2 hours, and the pH of the reaction mixture was adjusted to 4 with 20 N sulfuric acid to obtain an aqueous solution of a thermosetting resin (2) containing 50% solids.

(vi) Synthesis of resin (3):

41 g (0.4 mole) of diethylenetriamine and 240 g of water were charged in the same apparatus as in (iii), and 185 g (2 moles) of epichlorohydrin was added thereto while keeping the temperature at 45°C. After continuing the reaction at 45°C for 1 hour, the resin (Y-1) obtained in (i) was added thereto in the same amount as in (i), and the reaction was conducted at 40 to 45°C for 2 hours. Then, the pH of the reaction solution was adjusted to 3.5 with 20 N sulfuric acid to obtain an aqueous solution of a thermosetting resin (3) containing 50% solids.

(vii) Synthesis of resin (Y-2):

365 g (2.5 moles) of triethylenetetramine, 20 g of water, and 146 g (1 mole) of adipic acid were charged into the same apparatus as in (iii), and dehydration condensation was conducted at 155 to 160°C for 4 hours. Then, 60 g (1 mole) of urea was added thereto, and a deammoniation reaction was conducted at 145 to 150°C for 3 hours. After cooling the reaction mixture to 130°C, 240 g (4 moles) of urea was further added thereto, and a deammoniation reaction was conducted at 130 to 140°C for 3 hours, followed by gradual addition of 595 g of water to obtain an aqueous solution of polyamidopolyurea. Then, 162 g (2 moles) of 37% formalin was added thereto, and the resulting mixture was adjusted to pH 4.5 with 50% sulfuric acid, and kept at 60°C for 4 hours while stirring. After cooling the reaction solution to 25°C, its pH was adjusted to 7.5 with a 10N sodium hydroxide aqueous solution to obtain a resin (Y-2) containing 50% solids.

(viii) Synthesis of resin (4):

The whole amount of compound (X-2) obtained in (ii) and the whole amount of resin (Y-2) obtained in (vii) were charged into the same apparatus as in (iii), and the pH of the mixture was adjusted to 3 with 20 N sulfuric acid while stirring to obtain an aqueous solution of a thermosetting resin (4) containing 50% solids.

(ix) Synthesis of resin (5):

The whole amount of compound (X-2) obtained in (ii) and the whole amount of resin (Y-2) obtained in (vii) were charged into the same apparatus as in (iii) and reacted with each other at 45 to 50°C for 2 hours. Then, the pH of the reaction solution was adjusted to 3 with 20 N sulfuric acid to obtain an aqueous solution of a thermosetting resin (5) containing 50% solids.

(x) Synthesis of resin (6):

38 g (0.2 mole) of tetraethylenepentamine and 200 g of water were charged into the same apparatus as in (iii), and 130 g (1.4 moles) of epichlorohydrin was added thereto while keeping the temperature at 40°C. The reaction was continued at 40°C for 3 hours.

Then, the whole amount of resin (Y-2) obtained in (vii) was added thereto, and the reaction was conducted at 35 to 40°C for 2 hours.

After completion of the reaction, the pH of the reaction mixture was adjusted to 4 with 20 N sulfuric acid to obtain an aqueous solution of a thermosetting resin (6) containing 50% solids.

(xi) Synthesis of resin (Y-3):

206 g (2 moles) of diethylenetriamine and 60 g (1 mole) of urea were charged into the same reaction apparatus as in (iii), and a deammoniation reaction was conducted at 145 to 150°C for 3 hours. Then, 118 g (1 mole) of succinic acid was added thereto, and a dehydration condensation was conducted at 150°C for 4 hours. After cooling the reaction mixture to 130°C, 96 g (1.6 moles) of urea was added thereto, and a deammoniation reaction was conducted at 125 to 130°C for 3 hours, followed by adding thereto 355 g of water to obtain a polyamidopolyurea aqueous solution.

Then, 105.3 g (1.3 moles) of 37% formalin was added thereto, and the pH of the reaction mixture was adjusted to 10 with 10N sodium hydroxide. After keeping the mixture at 60°C for 2 hours while stirring, its pH was adjusted to 5.5 with concentrated hydrochloric acid, after which it was kept at 60°C for 3 hours while stirring. Thereafter, the mixture was cooled to 25°C, and its pH was adjusted to 7.5 with a 10N sodium hydroxide aqueous solution to obtain a resin (Y-3) containing 50% solids.

(xii) Synthesis of resin (7):

29 g (0.2 mole) of triethylenetetramine and 130 g of water were charged into the same reaction apparatus as in (iii), and 111 g (1.2 moles) of epichlorohydrin was added thereto while keeping the temperature at 40°C. After continuing the reaction at 40°C for 2 hours, the whole amount of water-soluble resin (Y-3) described above was added thereto, and the reaction was conducted at 35 to 40°C for 2 hours.

Then, the pH of the reaction mixture was adjusted to 5 with 20 N sulfuric acid to obtain an aqueous solution of a thermosetting resin (7) containing 50% solids.

(xiii) Synthesis of resin (8):

29 g (0.2 mole) of tetraethylenepentamine, 21 g (0.2 mole) of diethylenetriamine, and 240 g of water were charged into the same reaction apparatus as in (iii), and 185 g (2.0 moles) of epichlorohydrin was added thereto while keeping the temperature at 40°C. After continuing the reaction at 40°C for 2 hours, the whole amount of resin (Y-1) obtained in (iii) was added thereto, and reaction was conducted at 40 to 45°C for 2 hours.

Then, the pH of the reaction mixture was adjusted to 4 with 20 N sulfuric acid to obtain an aqueous solution of a thermosetting resin (8) containing 50% solids.

(xiv) Synthesis of resin (Y-4):

103 g (1 mole) of diethylenetriamine, 146 g (1 mole) of triethylenetetramine, 20 g of water, and 100 g of a dibasic carboxylic acid mixture (0.77 mole as dibasic carboxylic acid) (composed of 22% succinic acid, 64% glutaric acid and 14% adipic acid) were charged into the same reaction apparatus as in (iii), and dehydration condensation was conducted at 160 to 165°C for 4 hours. Then, 60 g (1 mole) of urea was added thereto, and a deammoniation reaction was conducted at 145 to 150°C for 4 hours. After cooling the reaction mixture to 130°C, 180 g (3 moles) of urea was further added thereto, and a deammoniation reaction was conducted at 130 to 140°C for 5 hours. Then, 410 g of water was gradually added thereto to obtain a polyamidopolyurea aqueous solution.

To this solution was added 97.2 g (1.2 moles) of 37% formalin, and the resulting mixture was adjusted to pH 4 with concentrated hydrochloric acid and kept at 50°C for 6 hours while stirring. After cooling the reaction solution to 30°C, its pH was adjusted to 6.5 with a 10N sodium hydroxide aqueous solution to obtain a resin (Y-4) containing 50% solids.

(xv) Synthesis of resin (9):

34 g (0.23 mole) of triethylenetetramine and 190 g of water were charged in the same reaction apparatus as in (iii), and 128 g (1.38 moles) of epichlorohydrin was added thereto while keeping the inside temperature at 50°C. After continuing the reaction at 50°C for 1 hour, the whole amount of water-soluble resin (Y-4) described above was added thereto, and reaction was conducted at 45 to 50°C for 1 hour.

Then, the pH of the reaction mixture was adjusted to 5 with 20 N sulfuric acid to obtain an aqueous solution of a thermosetting resin (9) containing 50% solids.

Examples 3 to 16

(1) Preparation of paper coating compositions:

Kaolin clay, calcium carbonate, and aluminum hydroxide were used as pigments. To a pigment slurry dispersed in water by adding a sodium polyacrylate type dispersing agent were added an aqueous solution of previously gelatinized oxidized starch and a styrenebutadiene latex. Further, water resistance-imparting agents were added in amounts as indicated in Table 1, and the resulting mixtures were stirred well to properly mix the ingredients. The pH of the compositions was finally adjusted to 9.5 with a sodium hydroxide aqueous solution, and the solids concentration thereof was adjusted to 55 wt% to prepare paper coating compositions. Additionally, the basic compounding ratios of ingredients other than the water resistance-imparting agents in the compositions are shown in Table 1.

(2) Preparation of coated paper:

Each of the compositions obtained as described above was coated on both sides of a base paper of 85 g/m² in basis weight in an amount of 15 g/m² per one side of the paper using a coating rod, then dried in hot air at 120°C for 30 minutes. Then, the resulting coated papers were subjected to super calendering (roll temperature: 60°C; roll linear pressure: 60 kg/cm; passed twice between the rolls), and conditioned at 20°C and 65% RH to be used as test samples for various tests.

(3) Various testing methods:
(A) Physical properties of coating solution:
    (i) pH of coating solution—measured at 20°C on a glass electrode pH meter.
    (ii) Viscosity of coating solution—measured at 20°C and 60 rpm on a Brookfield viscometer.

(B) Physical properties of coated paper:
(i) Water resistance of coated film:

(a) Wet rub method:
0.1 ml of deionized water was dropped onto a coated paper, and rubbed seven times with the tip of a finger. The eluate was transferred to a black paper to judge the amount of the eluate with the naked eye. The judgement was conducted by assigning a value ranging from 1 (poor water resistance) to 5 (excellent water resistance).

(b) Wet pick method:
The coated surface was wetted by a water supply roll using an RI tester (made by Akira Seisakusho) and subjected to printing to observe and judge the state of delamination and damage of coated layer with the naked eye according to the same judging rating as in Wet Rub method.

(ii) Determination of formaldehyde released from coated paper—according to the acetylacetone method described in JIS L-1041, liquid phase extraction method (2).
Additionally, determination of formaldehyde was conducted, for example, by sealing the sample in a polyethylene bag to protect it from formaldehyde released from other samples or to prevent exhalation of formaldehyde from the sample.

(iii) Ink receptivity of coated paper:
Samples were printed according to either of the following methods using an RI tester, and ink receptivity was observed and judged with the naked eye. The judgement was conducted by assigning a value ranging from 5 (good) to 1 (poor).

(a) Method A
Water was dropwise added to an ink under milling, then the resulting ink was used for printing.

(b) Method B
The coated surface of a sample was wetted with a water supply roll, then printed.

(c) Method C
Printing was conducted by combining the above-described Methods A and B.

(iv) Whiteness and heat-resistant whiteness:
Whiteness of a coated paper sample before and after heat treatment at 150°C for 30 minutes using a hot-air drying machine was measured according to JIS P-8123 by measuring the B value on a Hunter reflectometer. The higher the value, the better the whiteness.

(v) Blister resistance:
A double-coated paper sample was printed on both sides with an ink for rotary offset printing using an RI tester and, after conditioning, it was dipped in a heated silicone oil bath to determine the minimum temperature at which blistering took place.

(4) Results of tests:
Compositions containing each of the resins obtained in Example 1 were evaluated according to the tests described above. The resins used and compounding formulations are shown in Table 2, together with the results of the tests.

Comparative Examples 1 and 2
A coating composition was prepared in the same manner as in the Examples above except for not using resins (B) to (L), polyalkylenepolyamine, alkylenediamine and epihalohydrin as water resistance-imparting agents. The compounding formulations and results of tests are shown in Table 3.

Comparative Examples 3 to 6
A coating composition was prepared in the same manner as in the above Examples except for using resin (A) or (B) alone as a water resistance-imparting agent to evaluate its properties. Compounding formulations and results of the tests are shown in Table 3.

TABLE 1

| Compound ingredient | Formulation No. | | | |
|---|---|---|---|---|
| | 1 | | 2 | |
| Kaolin clay | 85 | parts by weight | 80 | parts by weight |
| Calcium carbonate | 15 | " | 0 | " |
| Aluminum hydroxide | 0 | " | 20 | " |
| Dispersing agent (sodium polyacrylate) | 0.4 | " | 0.4 | " |
| Styrene-butadiene type latex | 10 | " | 10 | " |
| Oxidized starch | 6 | " | 6 | " |

TABLE 2(A)
Paper coating composition

| Item | Ex. 3 | Ex. 4 | Ex. 5 | Ex. 6 | Ex. 7 | Ex. 8 | Ex. 9 | Ex. 10 | Ex. 11 | Ex. 12 | Ex. 13 | Ex. 14 | Ex. 15 | Ex. 16 |
|---|---|---|---|---|---|---|---|---|---|---|---|---|---|---|
| Compounding Formulation | | | | | | | | | | | | | | |
| Water resistance-imparting agent | Resin (A) 0.35 part | Resin (B) 0.45 part | Resin (C) 0.5 part | Resin (D) 0.5 part | Resin (E) 0.4 part | Resin (F) 0.5 part | Resin (B) 0.35 part | Resin (D) 0.5 part | Resin (G) 0.5 part | Resin (H) 0.5 part | Resin (I) 0.5 part | Resin (J) 0.5 part | Resin (K) 0.5 part | Resin (L) 0.5 part |
| Epihalohydrin (part) | Epichlorohydrin 0.1 | No | No | No | No | No | No | No | No | No | No | No | No | No |
| Alkylenediamine or polyalkylene-polyamine (part) | Tri-ethylene-tetramine 0.05 | Tri-ethylene-tetramine 0.05 | No | No | Tetra-ethylene-pentamine 0.1 | No | Di-ethylene-triamine 0.15 | No | No | No | No | No | No | No |
| Formulation No. | 1 | 1 | 1 | 1 | 1 | 2 | 2 | 2 | 1 | 1 | 1 | 2 | 2 | 2 |
| Physical properties of coating composition Viscosity mPa·s | | | | | | | | | | | | | | |
| Upon prep. | 540 | 560 | 560 | 550 | 580 | 480 | 450 | 470 | 560 | 570 | 570 | 470 | 480 | 480 |
| After 24 hrs. | 590 | 600 | 600 | 600 | 620 | 530 | 520 | 520 | 600 | 600 | 610 | 520 | 520 | 520 |
| pH (upon prep.) | 9.5 | 9.4 | 9.5 | 9.5 | 9.5 | 9.6 | 9.4 | 9.5 | 9.5 | 9.5 | 9.4 | 9.4 | 9.5 | 9.5 |

TABLE 2 (B)
Paper coating composition

| Item | Ex. 3 | Ex. 4 | Ex. 5 | Ex. 6 | Ex. 7 | Ex. 8 | Ex. 9 | Ex. 10 | Ex. 11 | Ex. 12 | Ex. 13 | Ex. 14 | Ex. 15 | Ex. 16 |
|---|---|---|---|---|---|---|---|---|---|---|---|---|---|---|
| Properties of coated paper Coated amount/side (g/m$^2$) | 15.0 | 15.0 | 14.9 | 15.2 | 15.3 | 14.9 | 14.9 | 15.1 | 14.8 | 15.0 | 15.0 | 15.1 | 14.9 | 15.0 |
| Water resistance Wet Pick method | 4.7 | 4.8 | 4.8 | 4.7 | 4.8 | 4.9 | 4.8 | 4.8 | 4.8 | 4.7 | 4.7 | 4.7 | 4.8 | 4.8 |
| Wet Rub method | 4.7 | 4.8 | 4.9 | 4.8 | 4.8 | 4.8 | 4.8 | 4.7 | 4.8 | 4.8 | 4.8 | 4.8 | 4.8 | 4.8 |
| Amount of released formaldehyde (ppm) | 8 | 9 | 8 | 9 | 9 | 9 | 8 | 9 | 7 | 9 | 8 | 7 | 7 | 7 |
| Ink receptivity Method A | 4.7 | 4.8 | 4.9 | 4.8 | 4.9 | 4.8 | 4.8 | 4.8 | 4.8 | 4.8 | 4.9 | 4.8 | 4.7 | 4.7 |
| Method B | 4.8 | 4.9 | 4.9 | 4.7 | 4.8 | 4.7 | 4.7 | 4.8 | 4.7 | 4.8 | 4.9 | 4.8 | 4.8 | 4.7 |
| Method C | 4.7 | 4.8 | 4.8 | 4.8 | 4.8 | 4.7 | 4.7 | 4.8 | 4.7 | 4.8 | 4.8 | 4.8 | 4.8 | 4.8 |
| Whiteness (%) Before heat treatment | 80.0 | 79.9 | 80.1 | 79.9 | 80.0 | 80.2 | 79.8 | 80.1 | 79.7 | 79.9 | 79.9 | 80.0 | 79.8 | 80.2 |
| After heat treatment | 78.0 | 77.9 | 78.0 | 78.1 | 78.1 | 77.8 | 78.0 | 78.0 | 77.9 | 78.0 | 78.0 | 78.2 | 78.1 | 78.0 |
| Blister resistance (°C) | 220 | 230 | 240 | 230 | 240 | 230 | 220 | 220 | 230 | 220 | 230 | 230 | 230 | 230 |

### TABLE 3
#### Paper coating composition

| Item | Comparative Example 1 | Comparative Example 2 | Comparative Example 3 | Comparative Example 4 | Comparative Example 5 | Comparative Example 6 |
|---|---|---|---|---|---|---|
| Compounding formulation | | | | | | |
|   Water resistance-imparting agent part | No | No | Resin (A) 0.5 | Resin (A) 0.5 | Resin (B) 0.5 | Resin (B) 0.5 |
|   Epihalohydrin | No | No | No | No | No | No |
|   Alkylenediamine or polyalkylene-polyamine | No | No | No | No | No | No |
|   Formulation No. | 1 | 2 | 1 | 2 | 1 | 2 |
| Physical properties of coating composition | | | | | | |
|   Viscosity mPa·s | | | | | | |
|     Upon prep. | 560 | 470 | 530 | 460 | 550 | 480 |
|     After 24 hrs. | 600 | 510 | 550 | 490 | 590 | 500 |
|   pH (upon prep.) | 9.5 | 9.5 | 9.6 | 9.5 | 9.5 | 9.5 |

TABLE 3 (cont.)
Paper coating composition

| Item | Comparative Example 1 | Comparative Example 2 | Comparative Example 3 | Comparative Example 4 | Comparative Example 5 | Comparative Example 6 |
|---|---|---|---|---|---|---|
| Properties of coated paper | | | | | | |
| Coated amount/side (g/m$^2$) | 15.3 | 15.7 | 14.8 | 15.2 | 14.9 | 15.0 |
| Water resistance | | | | | | |
| Wet Pick method | 1.0 | 1.0 | 3.8 | 3.5 | 4.2 | 4.0 |
| Wet Rub method | 1.0 | 1.0 | 3.8 | 3.8 | 4.2 | 4.0 |
| Amount of released formaldehyde (ppm) | 1 | 1 | 9 | 9 | 8 | 9 |
| Ink receptivity | | | | | | |
| Method A | 1.5 | 1.5 | 4.0 | 4.0 | 4.3 | 4.2 |
| Method B | 1.5 | 1.5 | 4.0 | 4.0 | 4.3 | 4.2 |
| Method C | 1.0 | 1.0 | 3.5 | 3.8 | 4.0 | 4.0 |
| Whiteness (%) | | | | | | |
| Before heat treatment | 79.8 | 79.0 | 80.0 | 80.1 | 80.0 | 79.9 |
| After heat treatment | 77.5 | 77.0 | 78.1 | 78.1 | 77.9 | 78.0 |
| Blister resistance (°C) | 180 | 180 | 200 | 200 | 210 | 210 |

Examples 17 to 29

Resins obtained in Example 2 were evaluated in the same manner as in Examples 3 to 16. Resins and compounding formulations used are shown in Table 4. Results of tests on their properties are also shown in Table 4.

Comparative Examples 7 to 10

Coating solutions were prepared in the same manner as in the Examples using resin (Y-1) or resin (Y-2) as a water resistance-imparting agent to evaluate their properties. Compounding formulations and results of the tests on their properties are shown in Table 5.

TABLE 4(A)
Paper coating composition

| Item | Ex. 17 | Ex. 18 | Ex. 19 | Ex. 20 | Ex. 21 | Ex. 22 | Ex. 23 | Ex. 24 | Ex. 25 | Ex. 26 | Ex. 27 | Ex. 28 | Ex. 29 |
|---|---|---|---|---|---|---|---|---|---|---|---|---|---|
| **Compounding formulation** | | | | | | | | | | | | | |
| Water resistance-imparting agent (part) | Resin (1) 0.5 | Resin (2) 0.5 | Resin (4) 0.5 | Resin (5) 0.5 | Resin (1) 0.5 | Resin (2) 0.5 | Resin (4) 0.5 | Resin (5) 0.5 | Resin (3) 0.5 | Resin (6) 0.5 | Resin (7) 0.5 | Resin (8) 0.5 | Resin (9) 0.5 |
| Formulation No. | 1 | 1 | 1 | 1 | 2 | 2 | 2 | 2 | 1 | 1 | 1 | 1 | 1 |
| **Physical properties of coating composition** | | | | | | | | | | | | | |
| Viscosity mPa·s | | | | | | | | | | | | | |
| Upon prep. | 560 | 570 | 580 | 580 | 470 | 480 | 450 | 460 | 560 | 580 | 560 | 570 | 560 |
| After 24 hrs. | 570 | 580 | 610 | 600 | 500 | 520 | 490 | 490 | 580 | 590 | 580 | 590 | 590 |
| pH (upon prep.) | 9.4 | 9.3 | 9.4 | 9.4 | 9.4 | 9.4 | 9.4 | 9.3 | 9.4 | 9.4 | 9.5 | 9.5 | 9.5 |
| **Properties of coated paper** | | | | | | | | | | | | | |
| Coated amount/side (g/m²) | 15.0 | 15.2 | 14.9 | 15.1 | 15.1 | 15.3 | 15.5 | 15.0 | 15.1 | 14.9 | 15.0 | 15.0 | 15.1 |
| Water resistance | | | | | | | | | | | | | |
| Wet Pick method | 4.8 | 4.9 | 4.8 | 4.8 | 4.9 | 4.8 | 4.8 | 4.8 | 4.8 | 4.8 | 4.7 | 4.8 | 4.8 |
| Wet Rub method | 4.7 | 4.8 | 4.7 | 4.7 | 4.8 | 4.9 | 4.8 | 4.8 | 4.8 | 4.8 | 4.8 | 4.8 | 4.8 |

TABLE 4 (B)
Paper coated composition

| Item | Ex. 17 | Ex. 18 | Ex. 19 | Ex. 20 | Ex. 21 | Ex. 22 | Ex. 23 | Ex. 24 | Ex. 25 | Ex. 26 | Ex. 27 | Ex. 28 | Ex. 29 |
|---|---|---|---|---|---|---|---|---|---|---|---|---|---|
| Properties of coated paper | | | | | | | | | | | | | |
| Amount of released form- aldehyde (ppm) | 8 | 8 | 7 | 8 | 8 | 8 | 9 | 8 | 9 | 8 | 8 | 8 | 9 |
| Ink receptivity | | | | | | | | | | | | | |
| Method A | 4.8 | 4.8 | 4.7 | 4.7 | 4.8 | 4.8 | 4.7 | 4.7 | 4.8 | 4.7 | 4.8 | 4.8 | 4.8 |
| Method B | 4.8 | 4.9 | 4.7 | 4.8 | 4.8 | 4.7 | 4.7 | 4.8 | 4.8 | 4.7 | 4.8 | 4.8 | 4.8 |
| Method C | 4.7 | 4.8 | 4.7 | 4.7 | 4.8 | 4.8 | 4.7 | 4.8 | 4.8 | 4.9 | 4.7 | 4.7 | 4.8 |
| Whiteness (%) | | | | | | | | | | | | | |
| Before heat treatment | 79.8 | 79.7 | 79.5 | 80.0 | 80.0 | 80.2 | 79.9 | 79.9 | 80.1 | 80.0 | 79.8 | 80.1 | 80.0 |
| After heat treatment | 77.5 | 78.2 | 77.8 | 77.9 | 78.1 | 77.9 | 77.8 | 78.0 | 77.9 | 78.1 | 77.8 | 78.0 | 77.9 |
| Blister resist- ance (°C) | 240 | 240 | 240 | 230 | 230 | 230 | 230 | 230 | 240 | 230 | 230 | 230 | 230 |

. TABLE 5

| Item | Paper coating composition | | | |
| --- | --- | --- | --- | --- |
| | Comp Ex. 7 | Comp. Ex. 8 | Comp. Ex. 9 | Comp. Ex. 10 |
| Compounding formulation | | | | |
| Water resistance-imparting agent (part) | Resin (Y-1) 0.5 | Resin (Y-1) 0.5 | Resin (Y-2) 0.5 | Resin (Y-2) 0.5 |
| Formulation No. | 1 | 2 | 1 | 2 |
| Physical properties of coating composition | | | | |
| Viscosity mPa·s | | | | |
| Upon prep. | 540 | 460 | 550 | 470 |
| After 24 h | 580 | 480 | 570 | 480 |
| pH (upon prep.) | 9.6 | 9.5 | 9.5 | 9.5 |
| Properties of coated paper | | | | |
| Coated amount/side (g/m²) | 14.9 | 15.0 | 15.1 | 15.1 |
| Water resistance | | | | |
| Wet Pick method | 3.8 | 3.5 | 4.2 | 4.0 |
| Wet Rub method | 3.5 | 3.5 | 4.0 | 3.8 |
| Amount of released formaldehyde (ppm) | 8 | 9 | 9 | 9 |
| Ink receptivity | | | | |
| Method A | 4.0 | 4.0 | 4.2 | 4.2 |
| Method B | 4.0 | 4.0 | 4.2 | 4.0 |
| Method C | 3.5 | 3.5 | 4.2 | 4.2 |
| Properties of coated paper | | | | |
| Whiteness (%) | | | | |
| Before heat treatment | 79.1 | 78.8 | 78.5 | 78.7 |
| After heat treatment | 77.1 | 76.9 | 77.4 | 77.2 |
| Blister resistance (°C) | 200 | 200 | 210 | 210 |

## Claims

1. A process of preparing a thermosetting resin or composition in aqueous solution from (Y) a water-soluble resin obtained by reacting urea, polyalkylenepolyamine and dibasic carboxylic acid and further reacting and resulting polyamidopolyurea with formaldehyde, characterized by reacting in any order or mixing acid water-soluble resin (Y) and (a) at least one alkylenediamine or polyalkylenepolyamine and (b) epihalohydrin.

2. A process as claimed in Claim 1, wherein said water-soluble resin (Y) was obtained by a deammoniation reaction between urea and polyalkylenepolyamine, then a dehydration condensation between the reaction product and dibasic carboxylic acid, and a deammoniation reaction between the resulting product and urea, and a reaction of the thus obtained polyamidopolyurea with formaldehyde in an aqueous solution under acidic condition, or initially under alkaline condition and then under acidic condition.

3. A process as claimed in Claim 1, wherein said water-soluble resin (Y) was obtained by a dehydration condensation between polyalkylenepolyamine and dibasic carboxylic acid, then a deammoniation reaction between the reaction product and urea, and a reaction of the thus obtained polyamidopolyurea with formaldehyde in an aqueous solution under an acidic condition, or initially under alkaline condition and then under acidic condition.

4. A process as claimed in Claim 2, wherein from 1.5 to 2.5 moles of polyalkylenepolyamine per mole of urea is used in the reaction between urea and polyalkylenepolyamine, and subsequently dibasic carboxylic acid is used in an amount of from 0.3 to 0.7 mole per mole of the polyalkylenepolyamine, and subsequently urea is used in an amount of from 0.2 to 1.5 moles per mole of secondary amino group in the polyalkylenepolyamine.

5. A process as claimed in Claim 2 or 4, wherein the temperature during the reaction between urea and polyalkylenepolyamine is maintained at from 100° to 200°C, the temperature during the reaction between the resulting product and dibasic carboxylic acid is maintained at from 120° to 250°C, and the temperature during the reaction between the resulting product and urea is maintained at from 100° to 180°C.

6. A process as claimed in Claim 3, wherein from 1.4 to 3.0 moles of polyalkylenepolyamine is used per mole of dibasic carboxylic acid in the reaction between the dibasic carboxylic acid and the polyalkylenepolyamine, and the amount of urea used is from 0.2 to 1.0 mole per mole of the amino group of polyalkylenepolyamine.

7. A process as claimed in Claim 3 or 6, wherein the temperature during the reaction between the dibasic carboxylic acid and the polyalkylenepolyamine is maintained from 120 to 250°C, and the temperature during the reaction between the resulting product and urea is maintained at from 100 to 180°C.

8. A process as claimed in any of Claims 1 to 7, wherein the amount of formaldehyde is from 0.2 to 1 mole per mole of the total amount of urea used for synthesizing the polyamidopolyurea.

9. A process as claimed in any of Claims 1 to 8, wherein the temperature during the reaction between formaldehyde and polyamidopolyurea is maintained at from 40 to 80°C.

10. A process as claimed in Claim 1, wherein said thermosetting resin aqueous solution is obtained by mixing or simultaneously reacting components (a), (b) and (Y), or by reacting or mixing a reaction product between (Y) and (b) with (a).

11. A process as claimed in any of Claims 1 to 10, wherein said thermosetting resin aqueous solution is obtained by reacting or mixing a reaction product (X) between components (a) and (b) with the water-soluble resin (Y).

12. A process as claimed in Claim 10, wherein the amount of (a) is from 0.1 to 3 moles per mole of the dibasic carboxylic acid used for synthesizing (Y).

13. A process as claimed in Claim 10 or 12, wherein the amount of (b) is from 0.1 to 4 moles per mole of (a).

14. A process as claimed in Claim 10, 12 or 13, wherein the temperature during the simultaneous reaction of (Y), (a) and (b) is maintained from 30 to 80°C.

15. A process as claimed in Claim 10, 12, 13 or 14, wherein the temperature of the reaction between (Y) and (b) is 30°C to reflux temperature, and the temperature of the reaction between the resulting product and (a) is 30 to 100°C.

16. A process as claimed in Claim 11, wherein the amount of (a) is 0.05 to 5 moles per mole of the dibasic carboxylic acid used for synthesizing (Y).

17. A process as claimed in Claim 11 or 16, wherein the molar ratio of (a) to (b) in (X) is 1:0.1 to 20.

18. A process as claimed in Claim 11, 16 or 17, wherein the temperature of the reaction between (a) and (b) is 30 to 80°C.

19. A process as claimed in Claim 11, 16, 17 or 18, wherein the temperature of the reaction between (X) and (Y) is 20 to 80°C.

20. A process as claimed in any of Claims 1 to 19, wherein the polyalkylenepolyamine is a compound having two primary amino groups and at least one secondary amino group per molecule.

21. A process as claimed in any of Claims 1 to 20, wherein said dibasic carboxylic acid is an aliphatic dibasic carboxylic acid.

22. A composition for coating onto paper, containing a pigment and an aqueous binder as major components, and further containing a thermosetting resin in aqueous solution, obtained by the method of any of the preceding claims.

23. A composition as claimed in Claim 22, wherein the solids content of the thermosetting resin obtained from (a), (b) and (Y) is 0.05 to 5 weight%, based on the weight of the pigment.

24. A coated paper having coated thereon a paper coating composition as claimed in Claim 22 or 23.

**Patentansprüche**

1. Verfahren zur Herstellung eines wärmehärtbaren Kunstharzes oder einer

## 0 081 994

Kunstharzzusammensetzung in wäßriger Lösung aus (Y) einem wasserlöslichen Kunstharz, erhältlich durch Umsetzung von Harnstoff, Polyalkylenpolyamin und einer zweiwertigen Carbonsäure und weitere Umsetzung des entstandenen Polyamidopolyharnstoffs mit Formaldehyd, gekennzeichnet durch Umsetzung in beliebiger Reihenfolge oder Vermischen des wasserlöslichen Kunstharzes (Y) mit (a) mindestens einem Alkylendiamin oder Polyalkylenpolyamin und (b) Epihalogenhydrin.

2. Verfahren nach Anspruch 1, in dem das wasserlösliche Kunstharz (Y) durch Ammoniak-Eliminierungsreaktion zwischen dem Harnstoff und dem Polyalkylenpolyamin, dann eine Dehydratation-Kondensation zwischen dem Reaktionsprodukt und der zweiwertigen Carbonsäure, eine Ammoniak-Eliminierungsreaktion zwischen dem entstandenen Produkt und Harnstoff und eine Umsetzung des so erhaltenen Polyamidopolyharnstoffs mit Formaldehyd in wäßrigerlösung unter sauren Bedingungen oder unter ursprünglich alkalischen Bedingungen und dann sauren Bedingungen erhältlich ist.

3. Verfahren nach Anspruch 1, in dem das wasserlösliche Kunstharz (Y) durch Dehydratation-Kondensation zwischen dem Polyalkylenpolyamin und der zweiwertigen Carbonsäure, eine Ammoniak-Eliminierungsreaktion zwischen dem Reaktionsprodukt und Harnstoff und eine Umsetzung des so erhaltenen Polyamidopolyharnstoffs mit Formaldehyd in wäßrigerlösung unter sauren Bedingungen oder unter ursprünglich alkalischen und dann sauren Bedingungen erhältlich ist.

4. Verfahren nach Anspruch 2, in dem von 1,5 bis 2,5 Mol Polyalkylenpolyamin je Mol Harnstoff in der Reaktion zwischen dem Harnstoff und dem Polyalkyenpolyamin verwendet werden, die zweiwertige Carbonsäure in einer Menge von 0,3 bis 0,7 Mol je Mol Polyalkylenpolyamin und dann Harnstoff in einer Menge von 0,2 bis 1,5 Mol je Mol sekundärer Aminogruppen im Polyalkylenpolyamin verwendet werden.

5. Verfahren nach Anspruch 2 oder 4, in dem die Temperatur während der Umsetzung des Harnstoffs und des Polyalkylenpolyamins auf von 100 bis 200°C, die Temperatur während der Umsetzung des entstandenden Produkts und der zweiwertigen Carbonsäure von 120 bis 250°C und die Temperatur während der Umsetzung des entstanenen Produkts und dem Harnstoff auf von 100 bis 180°C gehalten wird.

6. Verfahren nach Anspruch 3, in dem von 1,4 bis 3,0 Mol Polyalkylenpolyamin je Mol zweiwertiger Carbonsäure in der Umsetzung der zweiwertigen Carbonsäure und des Polyalkylenpolyamins und 0,2 bis 1,0 Mol Harnstoff je Mol Aminogruppe des Polyalkylenpolyamins verwendet werden.

7. Verfahren nach Anspruch 3 oder 6, in dem die Temperatur während der Umsetzung der zweiwertigen Carbonsäure und des Polyalkylenpolyamins auf von 120 bis 250°C und die Temperatur während der Umsetzung des entstanenen Produkts und Harnstoff auf von 100 bis 180°C gehalten wird.

8. Verfahren nach einem der Ansprüche 1—7, in dem Formaldehyd in einer Menge von 0,2 bis 1 Mol je Mol für die Herstellung des Polyamidopolyharnstoffs verwendeten Gesamtmenge an Harnstoff verwendet wird.

9. Verfahren nach einem der Ansprüche 1—8, in dem die Temperatur während der Umsetzung des Formaldehyds und des Polyamidopolyharnstoffs auf von 40 bis 80°C gehalten wird.

10. Verfahren nach Anspruch 1, in dem die wäßrige Lösung des wärmehärtbaren Kunstharzes durch Vermischen oder gleichzeitige Umsetzung der Komponenten (a), (b) und (Y) oder durch Umsetzung oder Vermischen eines Reaktionsproduktes von (Y) und (b) mit (a) erhältlich ist.

11. Verfahren nach einem der Ansprüche 1—10, in dem die wäßrige Lösung des wärmehärtbaren Kunstharzes durch Umsetzen oder Vermischen eines Reaktionsproduktes (X) der Komponenten (a) und (b) mit dem wasserlöslichen Kunstharz (Y) erhältlich ist.

12. Verfahren nach Anspruch 10, in dem die Komponente (a) in einer Menge von 0,1 bis 3 Mol je Mol zur Herstellung von (Y) verwendeter zweiwertiger Carbonsäure eingesetzt wird.

13. Verfahren nach Anspruch 10 oder 12, in dem die Komponente (b) in einer Menge von 0,1 bis 4 Mol je Mol (a) eingesetzt wird.

14. Verfahren nach Anspruch 10, 12 oder 13, in dem die Temperatur während der gleichzeitigen Umsetzung von (Y), (a) und (b) auf von 30 bis 80°C gehalten wird.

15. Verfahren nach Anspruch 10, 12, 13 oder 14, in dem die Temperatur der Umsetzung von (Y) und (b) 30°C bis Rückflußtemperatur und die Temperatur der Umsetzung des entstandenen Produkts und (a) 30 bis 100°C beträgt.

16. Verfahren nach Anspruch 11, in dem die Komponente (a) in einer Menge von 0,05 bis 5 Mol je Mol zur Herstellung von (Y) verwendeter zweiwertiger Carbonsäure eingesetzt wird.

17. Verfahren nach Anspruch 11 oder 16, in dem das Molverhältnis von (a) zu (b) in (X) 1:0,1 bis 20 beträgt.

18. Verfahren nach Anspruch 11, 16 oder 17, in dem die Temperatur der Umsetzung von (a) und (b) 30 bis 80°C beträgt.

19. Verfahren nach Anspruch 11, 16, 17 oder 18, in dem die Temperatur der Umsetzung von (X) und (Y) 20 bis 80°C beträgt.

20. Verfahren nach einem der Ansprüche 1—19, in dem als Polyalkylenpolyamin eine Verbindung mit zwei primären Aminogruppen und mindestens einer sekundären Aminogruppe je Molekül verwendet wird.

21. Verfahren nach einem der Ansprüche 1—20, in dem als zweiwertige Carbonsäure eine aliphatische zweiwertige Carbonsäure verwendet wird.

22. Zusammensetzung zum Beschichten von Papier mit einem Pigment und einem wäßrigen Bindemittel als Hauptbestandteile, gekennzeichnet durch den weiteren Gehalt eines wärmehärtbaren

20

Kunstharzes in wäßriger Lösung, das in dem Verfahren nach einem der vorgehenden Ansprüche erhältlich ist.

23. Zusammensetzung nach Anspruch 22, in der der Feststoffgehalt des aus (a), (b) und (Y) erhältlichen wärmehärtbaren Kunstharzes 0,05 bis 5 Gew.-%, bezogen auf das Pigment, beträgt.

24. Beschichtetes Papier mit einem Überzug aus einer Papierüberzugszusammensetzung nach Anspruch 22 oder 23.

**Revendications**

1. Procédé pour la préparation d'une résine ou d'une composition thermodurcissable en solution aqueuse à partir d'une résine soluble dans l'eau (Y) obtenue par réaction de l'urée, d'une polyalkylènepolyamine et d'un acide carboxylique dibasique, puis par réaction de la polyamidopolyurée obtenue avec du formaldéhyde, caractérisé en ce qu'on fait réagir dans n'importe quel ordre ou qu'on mélange ladite résine soluble dans l'eau (Y) avec (a) au moins une alkylènediamine ou une polyalkylènepolyamine et (b) une épihalohydrine.

2. Procédé selon la revendication 1, dans lequel ladite résine soluble dans l'eau (Y) a été obtenue par une réaction de désammoniation entre l'urée et une polyalkylènepolyamine, puis par une condensation déshydratation entre le produit de réaction et un acide carboxylique dibasique, et une réaction de désammoniation entre le produit obtenu et l'urée, et une réaction de la polyamidopolyurée obtenue avec le formaldéhyde en solution aqueuse dans des conditions acides, ou bien initialement dans des conditions alcalines, puis ensuite dans des conditions acides.

3. Procédé selon la revendication 1, dans lequel ladite résine soluble dans l'eau (Y) a été obtenue par condensation déshydratation entre une polyalkylènepolyamine et un acide carboxylique dibasique, puis une réaction de désammoniation entre le produit de réaction et l'urée, et une réaction de la polyamidopolyurée ainsi obtenue avec le formaldéhyde en solution aqueuse dans des conditions acides, ou initialement dans des conditions alcalines puis ensuite dans des conditions acides.

4. Procédé selon la revendication 2, dans lequel on utilise de 1,5 à 2,5 moles de polyalkylènepolyamine par mole d'urée dans la réaction entre l'urée et la polyalkylènepolyamine, que l'acide carboxylique dibasique est utilisé en une quantité de 0,3 à 0,7 mole par mole de la polyalkylènepolyamine, et que l'urée est utilisée en une quantité de 0,2 à 1,5 moles par mole du groupe amino secondaire dans la polyalkylènepolyamine.

5. Procédé selon la revendication 2 ou la revendication 4, dans lequel la température pendant la réaction entre l'urée et la polyalkylènepolyamine est maintenue entre 100 et 200°C, la température durant la réaction entre le produit obtenu et l'acide carboxylique dibasique est maintenue entre 120 et 250°C, et la température pendant la réaction entre le produit obtenu et l'urée est maintenue entre 100 et 180°C.

6. Procédé selon la revendication 3, dans lequel on utilise 1,4 à 3,0 moles de polyalkylènepolyamine par mole d'acide carboxylique dibasique dans la réaction entre l'acide carboxylique dibasique et la polyalkylènepolyamine, et que la quantité d'urée utilisée est de 0,2 à 1,0 mole par mole de groupe aminode la polyalkylènepolyamine.

7. Procédé selon la revendication 3 ou la revendication 6, dans lequel la température durant la réaction entre l'acide carboxylique dibasique et la polyalkylènepolyamine est maintenue entre 120 et 250°C, et la température durant la réaction entre le produit obtenu et l'urée est maintenue entre 100 et 180°C.

8. Procédé selon l'une des revendications 1 à 7, dans lequel la quantité de formaldehyde est de 0,2 à 1 mole par mole de quantité totale d'urée utilisée pour synthétiser la polyamidopolyurée.

9. Procédé selon l'une des revendications 1 à 8, dans lequel la température durant la réaction entre le formaldéhyde et la polyamidopolyurée est maintenue entre 40 et 80°C.

10. Procédé selon la revendication 1, dans lequel la dite solution aqueuse de résine thermodurcissable est obtenue par mélange ou par réaction simultanée des composants (a), (b) et (Y), ou bien par réaction au mélange d'un produit de réaction entre (Y) et (b) avec (a).

11. Procédé selon l'une des revendications 1 à 10, dans lequel ladite solution aqueuse de résine thermodurcissable est obtenue par réaction par mélange d'un produit de réaction (X) entre les composants (a) et (b) avec la résine soluble dans l'eau (Y).

12. Procédé selon la revendication 10, dans lequel la quantité de (a) est de 0,1 à 3 moles par mole de l'acide carboxylique dibasique utilisé pour synthétiser (Y).

13. Procédé selon la revendication 10 ou la revendication 12, dans lequel la quantité de (b) est de 0,1 à 4 moles par mole de (a).

14. Procédé selon l'une des revendications 10, 12 ou 13, dans lequel la température pendant la réaction simultanée de (Y), (a) et (b) est maintenue entre 30 et 80°C.

15. Procédé selon l'une des revendications 10, 12, 13 ou 14, dans lequel la température de la réaction (Y) et (b) est comprise entre 30°C et la température de reflux et que la température de réaction entre le produit obtenu et (a) est de 30 à 100°C.

16. Procédé selon la revendication 11, dans lequel la quantité de (a) est de 0,05 à 5 moles par mole d'acide carboxylique dibasique utilisé pour synthétiser (Y).

17. Procédé selon la revendication 11 ou la revendication 16, dans lequel Is rapport molaire (a) à (b) dans (X) est de 1:0.1 à 20.

18. Procédé selon l'une des revendications 11, 16 ou 17, dans lequel la température de la réaction entre (a) et (b) est de 30 à 80°C.

19. Procédé selon l'une des revendications 11, 16, 17 ou 18, dans lequel la température de la réaction entre (X) et (Y) est de 20 à 80°C.

20. Procédé selon l'une des revendications 1 à 19, dans lequel la polyalkylènepolyamine est un composé ayant deux groupes amino primaires, et au moins un groupe amino secondaire par molécule.

21. Procédé selon l'une des revendications 1 à 20, dans lequel ledit acide carboxylique dibasique est un acide carboxylique dibasique aliphatique.

22. Composition pour le revêtement du papier contenant un pigment et un liant aqueux comme composants principaux, et contenant en outre une résine thermodurcissable en solution aqueuse obtenue par le procédé selon l'une des revendications précédentes.

23. Composition selon la revendication 22, dans laquelle la teneur en solides de la résine thermodurcissable obtenue à partir de (a), (b) et (Y) est de 0,05 à 5% en poids, par rapport au poids du pigment.

24. Papier enduit présentant un revêtement d'une composition de revêtement du papier selon la revendication 22 ou la revendication 23.